# EUROPEAN PATENT APPLICATION

(11) **EP 2 194 477 A1**
(43) Date of publication of application: **09.06.2010**
(21) Application number: 08305883.4
(22) Date of filing: 04.12.2008
(51) Int. Cl.: G06F 21/00

(54) **User profiling method and associated system**

(71) Applicant: Alcatel Lucent, 75008 Paris (FR)
(72) Inventor: Kostadinov, Dimitre Davidov, 91620 Nozay (FR); Bertoni, Yves, 78141 Velizy (FR); Senot, Christophe, 91620 Nozay (FR); Aghasaryan, Armen, 91620 NOzay (FR)
(74) Representative: Hedarchet, Stéphane

(57) **Abstract**

A user profiling method destined to determine privacy preferences for a dynamic privacy system in a multi-service environment, comprising the following steps :
- defining by the user a set of privacy rules preferences,
- controlling privacy requirements consistency comprising checking whether protected information may be inferred from unprotected ones, the privacy requirements comprising the privacy policy model and the privacy rules,
- profile access analyzing for analyzing periodically the profile data access log in view of at least a service querying the user profile data,
- privacy rules updating to refine the privacy rules depending on the service's trust or services types or services invocator.

Associated system.

## Description

The present invention is related to a user profiling method destined to determine privacy preferences for a dynamic privacy system in a multi-service environment. It is also related to a corresponding system.

Nowadays, personalized services are becoming very popular (like personalized content recommendations, targeted ads, personalized search ...) as they provide users with individualized access to their data and services.

In order to adapt their behaviour to each user, these services use personalization techniques, such as content-based filtering, collaborative filtering, etc., which need to have access to user descriptions, commonly called user profiles. A user profile may contain various data about the user including sensitive and personal data such as names, social security number, handicaps, phone numbers, home address, interest domains, profession, hobbies, etc.

As these data are sometimes very sensitive for users, the latter are often reluctant to provide them. This behaviour can penalize the accuracy of personalization requests and thus their usage.

In this context, users must be able to control which data they want to share with applications. It can be done by means of personal privacy policies. One common use of privacy policies is for defining which types of services are allowed to access to which part of the user profile data and for what purpose.

The problem for the user is then to define the most appropriate privacy policies with respect to his preferences and with respect to service requirements in a multi-service environment. Indeed, several problems may occur when the user defines his privacy requirements (also called rules):
- the user abusively denies the access to some very useful information for a given service or class of services (ex. deny the access of the *date of birth* to a service providing personalized horoscopes),
- same type of services have the same access rights even if the user trusts differently each service,
- some sensitive information may stay unprotected if the user does not specify a privacy rule on it, even if such privacy rule can be inferred from the existing ones (ex. the user denies the access to his *astral sign* and the service accesses his *date* of *birth*).

Consequently, a system is needed that helps the user in specifying and in qualifying his privacy requirements by taking into account his preferences and the needs of different services.

There is a need to assist the user in specifying his privacy requirements and in helping him to adapt these requirements to the services that access his personal data.

There are solutions for expressing user privacy requirements such as the one proposed by the W3C/P3P (the World Wide Web Consortium / Platform for Privacy Preferences). It enables web sites to express their privacy practices in a standard way. These expressions are then used by user agents to inform the users of site practices and automate decision-making on what personal data the site can access according to the user's privacy preferences. However, the privacy preferences are static and a hidden user data is always inaccessible for the sites. The user is not proposed privacy preferences updates which can improve the satisfaction of his preferences on content. In addition, it does not enable distinguishing between sites having the same privacy practices.

Another way of securing the access to the user profile is using an access right mechanism. There are several ways access rights can be expressed:
- Discretionary Access Control: assigning to each couple (user, content) a combination of read, write or execute right,
- Mandatory Access Control: assign a security level to each content and to each user. Thus, users can only access contents of the same or inferior level,
- Rule Based Access Control: define roles and specify the content each role can access. Then each user is associated with the role(s) corresponding to his access rights (many user can have the same role and a user can have many roles).

Access right mechanisms can be used to define static privacy preferences without recommending possible updates. They do not use correlations between contents to infer other privacy rules.

Consequently, there is a lack of solutions for privacy preferences refinement and propagation.

The present invention aims at solving the above-mentioned problems.

The object of the present invention, according to an embodiment, is a user profiling method destined to determine privacy preferences for a dynamic privacy system in a multi-service environment, comprising the following steps:
- defining by the user a set of privacy rules preferences,
- controlling the consistency of privacy requirements comprising checking whether protected information may be inferred from unprotected one, the privacy requirements comprising the privacy policy model and the privacy rules,
- analyzing the log of profile accesses to check whether service needs can be satisfied with respect to user privacy preferences,
- privacy rules updating to refine the privacy rules depending on the service' trust or services types or services invocator.

The step for analyzing the log of profile accesses allows to assess if services/applications can access the part of user profile they need for personalization purposes.

According to an embodiment of the invention, the controlling step comprises searching for privacy rules which can be inferred from other privacy rules by taking into account correlations between profile elements.

According to an embodiment of the invention, the profile access analyzing comprises reporting a description of a profile data access history including the service, the service invocator or/and the usage.

According to an embodiment of the invention, the description comprises profile data frequently queried by a given service.

The object of the present invention, according to an embodiment, is also a dynamic privacy system in a multi-service environment, destined to determine privacy preferences, **characterized in that** the system comprises:
- defining means for defining a set of privacy rules preferences,
- controlling means for controlling the consistency of privacy requirements comprising means for checking whether protected information may be inferred from unprotected ones, the privacy requirements comprising the privacy policy model and the privacy rules,
- analyzing means for analyzing the log of profile accesses to check whether service needs can be satisfied with respect to user privacy preferences,
- privacy rules updating means to refine the privacy rules depending on the service' trust or services types or services invocator.

The object of the present invention, according to an embodiment, is also a computer program product for carrying out all the steps of the method according to the invention.

Other objects and further features of the present invention will be apparent from the following detailed description when read in conjunction with the accompanying drawing :

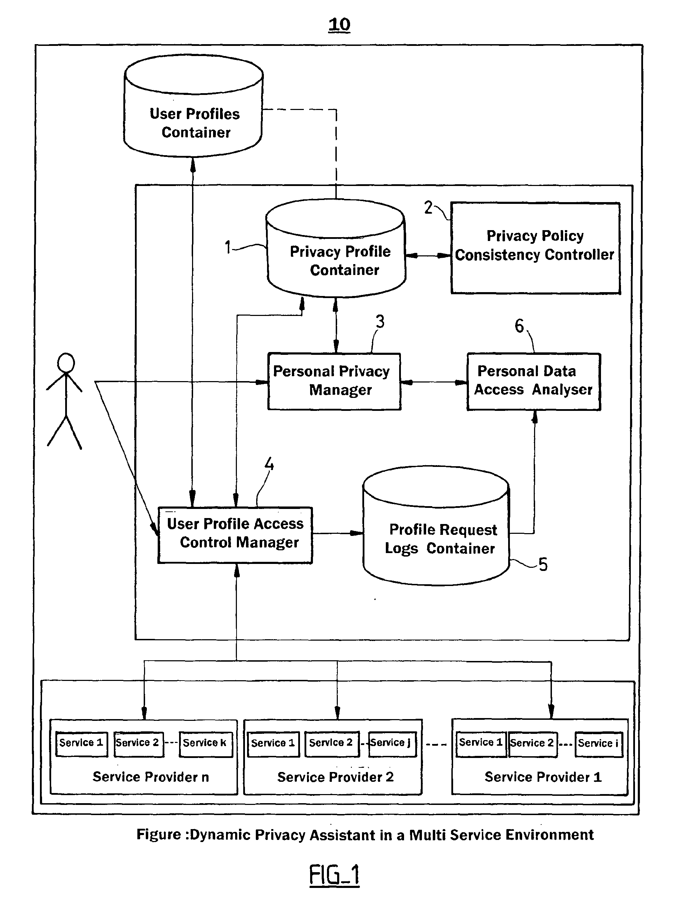

Fig. 1 illustrates a system according to an embodiment of the invention.

A description will hereinafter be given of embodiments of the present invention, by referring to the drawings.

In the method according an embodiment of the invention, the user initially defines a set of privacy preferences. These preferences can be expressed in various ways including access rights grant/denial mechanisms, privacy rules expressed in a given formalism such as the one proposed by the P3P (Platform for Privacy Preferences), mxn matrix showing how services classified in m-categories (types) can access n profile elements, etc.

As an example, it can be considered the matrix representation assuming that personalized services are classified in several categories such as: targeted ad, recommendation, social networking, content-based filtering, etc. and user profile is represented by a set of semantic concepts (eventually organized into categories).

The so-defined user privacy rules are then analyzed in order to check if they are consistent. In other words, the system checks if the protected information cannot be inferred from the unprotected one. A possible technique for improving the privacy requirements consistency is to infer other privacy rules by taking into account correlations between profile elements (ex. correlation between astral sign and date of birth).

When a personalized service tries to access the user profile, the system collects a log containing information about the profile querying process. Logs are then periodically analyzed by the system and a report is presented describing the profile data access history including the service, the service invocator, the usage, etc. For instance, profile elements frequently asked by a given service or a type/class of services are mentioned. Thus, the user is proposed possible updates which refine his privacy rules for increasing the accuracy of his personalization requests. The user then can accept some privacy updates for precise trusted services or services types or services invocators.

Hereinafter is described an embodiment of a system 10 according to the invention, as depicted in figure 1. The main functional blocks of the system 10 comprises :
- A Privacy Profile Data Storage module or so-called Privacy Profile Container 1:
   This module 1 stores all data related to the user privacy requirements. This includes the privacy policy model as well as the privacy rules describing how the profile content would be accessed.
- A Privacy Policy Consistency Controller 2:
   This controller 2 is in charge to keep consistent the user's privacy requirements. More precisely, he checks that the user profile content hidden by the user cannot be inferred from the accessible contents. For example, if the user wants to hide his astral sign, his date of birth has to be also hidden.
   One kind of mechanism for keeping consistent the privacy profile is the inference mechanism which propagates the privacy rules in order to discover deductible privacy rules. It can be applied on the initial privacy rules or after a privacy profile update.
- A Personal Privacy Management module or Personal Privacy Manager 3:
   This manager 3 provides the user with a way to manage his privacy profile. It includes a Graphical User Interface (GUI) and can be used to:
      - Display the user privacy profile,
      - Specify initial privacy rules,
      - Display the recommendations of privacy rules updates,
      - Manage (delete, create, update) the privacy rules.
- A User Profile Access Control Manager 4:
   This manager 4 is a middleware between the user and the services. It ensures the user privacy requirements are satisfied by the service providers. Its functionalities include:
      - matching between the user privacy requirements and the services needs,
      - querying the user profile to get the accessible content for a given service (the one defined by the privacy rules),
      - if needed, choose the most relevant services according to the user needs and privacy policies,
      - send the accessible part of the user profile to the services,
      - generate a log of the profile querying process that shows which service attempted to access which part of the profile and for what purpose.
- A Profile Request Logs Storage module or Profile Request Logs Container 5:
   This module 5 stores the logs generated by the User Profile Access Control Manager. These logs are then used by the Personal Data Access Analyser.

### - A Personal Data Access Analyser 6:

This analyser 6 analyses the logs of profile requests (stored in the Profile Request Logs Container) in order to find the most requested part of user profiles which is inaccessible for a given service or for a type of services. It then deduces and provides users with recommendations for privacy rules updates. These updates can consist in updating the privacy requirements for a single service or for a type of services. The so-generated update recommendations are sent to the Personal Privacy Manager that notifies the user and allows him to accept or not the updates. The user can make his decision of whether to accept or not the update according to a reward mechanism. For example, the user is given a certain credit in a DVD rental service when he reveals his demographic data as the service provider uses this data for collaborative filtering in order to improve his targeted ad service.

The above-mentioned modules and functional blocks may be partially or totally implemented as a software product. An embodiment of the invention is a ccomputer program product for carrying out all the steps of the method according to the invention.

The invention allows the users to propagate and to refine their privacy preferences. The system enables to analyze the service and the user behavior in order to adapt the privacy policies to the user preferences and the service capabilities.
By refining the privacy preferences, users will be provided with more relevant access to the information as services will have access to the appropriate part of the user profile.

The main advantages of the invention are:
- for users: improvement of the satisfaction of the privacy preferences by propagating them in order to find new ones, adaptation of the privacy policy to the trust of the user in each service provider; it enables discovering abusive privacy preferences; improvement of the relevance of delivered results for users who accept to reveal additional part of their profile,
- for service providers: allows them to improve the quality of their services as they can access a greater part of the user profile.

## Claims

1. User profiling method destined to determine privacy preferences for a dynamic privacy system in a multi-service environment, comprising the following steps :
- defining by the user a set of privacy rules preferences,
- controlling the consistency of privacy requirements comprising checking whether protected information may be inferred from unprotected one, the privacy requirements comprising the privacy policy model and the privacy rules,
- analyzing the log of profile accesses to check whether service needs can be satisfied with respect to user privacy preferences,
- privacy rules updating to refine the privacy rules depending on the service' trust or services types or services invocator.

2. Method according to claim 1, **characterized in that** the controlling step comprises searching for privacy rules which can be inferred from other privacy rules by taking into account correlations between profile elements.

3. Method according to claim 1 or 2, **characterized in that** the profile access analyzing comprises reporting a description of a profile data access history including the service, the service invocator or/and the usage.

4. Method according to claim 3, **characterized in that** the description comprises profile data frequently queried by a given service.

5. Dynamic privacy system in a multi-service environment, destined to determine privacy preferences, **characterized in that** the system comprises :
- defining means (1) for defining a set of privacy rules preferences,
- controlling means (2) for controlling the consistency of privacy requirements comprising means for checking whether protected information may be inferred from unprotected ones, the privacy requirements comprising the privacy policy model and the privacy rules,
- analyzing means (6) for analyzing the log of profile accesses to check whether service needs can be satisfied with respect to user privacy preferences,
- privacy rules updating means (3) to refine the privacy rules depending on the service' trust or services types or services invocator.

6. Computer program product for carrying out all the steps of the method according to any of claims 1 to 4.
